# DEMANDE DE BREVET EUROPEEN

(11) **EP 3 470 565 A1**
(43) Date de publication de la demande: **17.04.2019**
(21) Numéro de dépôt: 17196308.5
(22) Date de dépôt: 13.10.2017
(51) Int. Cl.: D04H 1/4209, D04H 1/4218, D04H 1/4226, E04F 15/20, E04B 9/00

(54) **PANNEAU ACOUSTIQUE EN LAINE MINERALE ET PROCEDE DE FABRICATION D'UN TEL PANNEAU**

(71) Demandeur: Saint-Gobain Isover, 92400 Courbevoie (FR); Saint-Gobain Placo, 92150 Suresnes (FR)
(72) Inventeur: JACQUS, Gary, 75018 Paris (FR); BERGER, Sylvain, 75018 Paris (FR); LEROY, Pierre, 60370 Saint Félix (FR); NILSSON, Erling, 224 72 Lund (SE); DRAY, Delphine, 93500 Pantin (FR)
(74) Mandataire: Saint-Gobain Recherche

(57) **Abrégé**

L'invention concerne un panneau en laine minérale destiné à être utilisé comme panneau acoustique et présentant :
- une densité de surface supérieure ou égale à 3,2 kg/m²,
- une résistivité à l'écoulement d'air comprise entre 30 et 120 kPa.s/m², et
- un module d'Young compris entre 0,5 et 4 MPa.

L'invention permet de proposer un panneau avec de bonnes propriétés d'absorption et d'isolation acoustiques sans découpe dans l'épaisseur.

## Description

L'invention concerne un panneau en laine minérale destiné à être utilisé comme panneau acoustique, par exemple dans un système de plafond suspendu.

Il est connu par le document EP 1 743 076 un panneau acoustique en laine minérale qui est crêpé puis fendu dans l'épaisseur et poncé. La face avant (celle destinée à être tournée vers le côté d'où provient le son à amortir) est la face coupée et poncée, qui est issue du centre du panneau avant découpe. Les fibres de cette surface et à proximité de cette surface ont une orientation préférentielle selon la direction Z. L'absorption acoustique α_{W} est supérieure ou égale à 0,7. La découpe dans l'épaisseur et le ponçage sont des étapes qui augmentent la durée de fabrication et qui sont source de production de déchets, ce qui entraîne des coûts.

Il y a donc un besoin pour un panneau réalisé sans découpe qui présente d'aussi bonnes, voire de meilleures, propriétés acoustiques.

Pour cela, l'invention propose un panneau en en laine minérale destiné à être utilisé comme panneau acoustique et présentant :
- une densité de surface supérieure ou égale à 3,2 kg/m², de préférence supérieure ou égale à 4 kg/m², ou encore supérieure ou égale à 4,5 kg/m², voire supérieure ou égale à 5 kg/m²,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4 MPa, de préférence compris entre 0,8 et 4 MPa, de façon encore plus préférée entre 1,2 MPa et 4 MPa, voire entre 1,5 MPa et 4 MPa, ou encore entre 2 MPa et 4 MPa,
- et le panneau n'étant pas coupé dans l'épaisseur selon un plan sensiblement parallèlement à ses faces principales.

Selon une autre particularité, le panneau présente un micronaire compris entre 2,5/5g et 6/5g, de préférence entre 3/5g et 6/5g, voire entre 3,5/5g et 6/5g, ou encore entre 4/5g et 5/5g ou un fasonaire compris entre 200 et 300, de préférence entre 200 et 290, voire entre 200 et 280, ou encore entre 200 et 270.

Selon une autre particularité, le panneau comprend en outre, sur chacune de ses faces principales, un voile.

Selon une autre particularité, le voile destiné à être tourné du côté d'où provient le son à amortir ayant une résistance spécifique à l'écoulement de l'air inférieure ou égale à 1 kPa.s/m, de préférence inférieure ou égale à 0,5 kPa.s/m, et le voile opposé ayant une résistivité spécifique à l'écoulement de l'air supérieure ou égale à 1 kPa.s/m, de préférence supérieure ou égal 5 kPa.s/m, voire supérieure ou égale à 10 kPa.s/m, ou encore étanche à l'air.

Selon une autre particularité, le panneau comprend un taux massique de liant compris entre 2% et 15% de la masse totale, de préférence entre 2% et 10% de la masse totale.

Selon une autre particularité, le panneau présente une absorption acoustique α_{W} supérieure ou égale à 0,9.

Selon une autre particularité, le panneau présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

L'invention concerne également un procédé de fabrication du panneau en laine minérale décrit plus haut, comprenant les étapes suivantes :
- fabrication d'un mat de fibres minérales par :
   ∘ centrifugation interne pour des fibres de verre, à l'aide d'une installation comportant :
      ▪ au moins un centrifugeur apte à tourner autour d'un axe X, notamment vertical, et dont la bande périphérique est percée d'une pluralité d'orifices pour délivrer des filaments d'un matériau fondu,
      ▪ un moyen d'étirage gazeux à haute température sous forme d'un brûleur annulaire qui assure l'étirage des filaments en fibres, et
      ▪ un tapis de réception associé à des moyens d'aspiration pour réceptionner les fibres, ou
   ∘ centrifugation externe pour des fibres de roche, à l'aide d'une installation comportant :
      ▪ au moins trois rotors aptes à tourner autour d'un axe Y, notamment horizontal, et dont le contact avec le matériau fondu permet de délivrer des fibres, et
      ▪ un tapis de réception associé à des moyens d'aspiration pour réceptionner les fibres,
- crêpage du mat de fibres minérales avec un taux de crêpage compris entre 1,5 et 5, de préférence entre 2 et 5, voire entre 2,5 et 5, ou encore entre 3 et 5.

Selon une autre particularité, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, qui est comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur, qui est compris entre 5000 et 40000, de préférence entre 15000 et 35000, et
∘ la vitesse de rotation du centrifugeur à une vitesse supérieure à 2000 tours/minute.

Selon une autre particularité, le diamètre des orifices de chaque centrifugeur est compris entre 0,5 et 1,1 mm.

Selon une autre particularité, chaque centrifugeur présente un diamètre compris entre 200 et 800 mm.

Selon une autre particularité, pendant l'étape de fabrication du mat de fibres de roche, une combinaison de paramètres est réglée parmi au moins :
∘ la tirée totale de roche par jour, qui est comprise entre 100 et 250 tonnes/jour,
∘ la vitesse de rotation des rotors, qui est comprise entre 2000 et 4000 tours/min.

Selon une autre particularité, chaque rotor présente un diamètre compris entre 150 mm et 350 mm.

Selon une autre particularité, du liant est projeté sur les fibres minérales avant qu'elles ne tombent sur le tapis de réception, avec un taux compris entre 2% et 15% de la masse totale, de préférence entre 2% et 10% de la masse totale, le mat de fibres minérales étant passé en étuve, de préférence après crêpage, afin de polymériser le liant.

Selon une autre particularité, un voile est collé sur chacune des faces principales du panneau en laine minérale.

L'invention concerne un panneau en laine minérale destiné à être utilisé comme panneau acoustique et présentant :
- une densité de surface supérieure ou égale à 3,2 kg/m², de préférence supérieure ou égale à 4 kg/m², ou encore supérieure ou égale à 4,5 kg/m², voire supérieure ou égale à 5 kg/m²,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa.

De plus, le panneau n'est pas coupé dans l'épaisseur selon un plan sensiblement parallèlement à ses faces principales. Cela signifie qu'il est issu directement de la fabrication de la laine minérale, et plus exactement qu'aucune de ses faces principales n'est une face issue d'une découpe dans un bloc de matériau de plus grand volume. Les fibres en surface et à proximité de la surface ont une orientation préférentiellement sensiblement parallèle à ladite face.

Le fait que le panneau selon l'invention ne soit pas refendu dans l'épaisseur, contrairement à ce qui est connu dans l'art antérieur, permet de gagner en temps de production, en coût matière et en gestion de déchets.

En outre, le panneau selon l'invention comporte des propriétés acoustiques très intéressantes grâce à une faible résistivité à l'écoulement d'air (comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m²) et à un module d'Young élevé (compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa), qui en font un candidat idéal pour une utilisation comme panneau acoustique En effet, dans les gammes mentionnées ci-dessus, plus la résistivité à l'écoulement d'air est faible, meilleure est l'absorption acoustique et, plus le module d'Young est important, meilleure est l'isolation acoustique.

La densité de surface du panneau selon l'invention, qui est supérieure ou égale à 3,2 kg/m², procure à celui-ci une tenue mécanique satisfaisante, qui s'améliore encore lorsque la densité de surface augmente. Ainsi, la densité de surface du panneau selon l'invention est de préférence supérieure ou égale à 4 kg/m², ou encore supérieure ou égale à 4,5 kg/m², voire supérieure ou égale à 5 kg/m².

La mesure de la résistivité à l'écoulement d'air est réalisée selon la norme ISO 9053.

La mesure du module d'Young est réalisée selon la norme ISO 18437 et selon l'article de C. Langlois, R. Panneton et N. Atalla : Polynomial relations for quasi-static mechanical characterization of isotropic poroelastic materials, J. Acoust. Soc. Am., 110:3032-3040, 2001.

Les mesures de la résistivité à l'écoulement d'air et du module d'Young sont réalisées sur le panneau sans les voiles avant/arrière.

Le panneau en laine minérale selon l'invention peut être réalisé en laine de verre, par fibrage par centrifugation interne, ou en laine de roche, par fibrage par centrifugation externe.

Les fibres minérales sont crêpées à un taux de crêpage compris entre 1,5 et 5. Le taux de crêpage a une influence sur la résistivité à l'écoulement d'air et sur le module d'Young. Le taux de crêpage est de préférence entre 2 et 5, voire entre 2,5 et 5, ou encore entre 3 et 5 pour diminuer encore la résistivité à l'écoulement d'air et augmenter le module d'Young. En effet, le crêpage favorise l'orientation des fibres selon une direction perpendiculaire Z aux faces principales du panneau : plus le taux de crêpage est élevé, plus l'orientation des fibres selon Z est importante et plus la résistivité à l'écoulement d'air est diminuée et le module d'Young augmenté.

Lorsque le panneau est en laine de verre, il présente en outre un micronaire compris entre 2,5/5g et 6/5g. De préférence, le micronaire est compris entre 3/5g et 6/5g, voire entre 3,5/5g et 6/5g, ou encore entre 4/5g et 5/5g. En effet, plus le micronaire augmente, plus la résistivité à l'écoulement d'air diminue et plus le module d'Young augmente.

Le micronaire est représentatif de la finesse des fibres de verre. La mesure du micronaire rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit " appareil micronaire ".

Lorsque le panneau est en laine de roche, il présente en outre un fasonaire compris entre 200 et 300. De préférence, le fasonaire est compris entre 200 et 290, voire entre 200 et 280, ou encore entre 200 et 270. En effet, plus le fasonaire diminue, plus la résistivité à l'écoulement d'air diminue et plus le module d'Young augmente.

Le fasonaire est représentatif de la finesse des fibres de roche. La mesure du fasonaire est une détermination de l'indice de finesse des fibres par une méthode similaire à celle du micronaire selon les normes ASTM-D-1448 ou DIN 53941. Le fasonaire est égal à la perte de charge ou différence de débit d'un courant gazeux traversant une éprouvette constituée d'une touffe de fibres minérales de masse donnée (égale à 5 g pour les mesures selon l'invention). La touffe de fibres, exemptes de liant ou de tout autre composant non fibreux, est comprimée dans une chambre cylindrique de volume prédéterminé. Le débit de gaz étant maintenu constant, on mesure à l'aide d'une colonne d'eau graduée en unités conventionnelles appelées fasonaires, la perte de charge à travers l'éprouvette. Le fasonaire est ainsi exprimé en millimètres de colonne d'eau pour 5 g (masse de l'éprouvette).

Le panneau en laine minérale présente en outre un voile sur chacune de ses faces principales. Le voile destiné à être tourné du côté d'où provient le son à amortir, dit voile avant, a une résistance spécifique à l'écoulement de l'air inférieure ou égale à 1 kPa.s/m, de préférence inférieure ou égal 0,5 kPa.s/m, de façon à laisser passer au maximum le son vers la laine minérale, qui va amortir le son pour permettre une bonne absorption acoustique. Le voile opposé, dit voile arrière, a une résistance spécifique à l'écoulement de l'air supérieure ou égale à 1 kPa.s/m, de préférence supérieure ou égal 5 kPa.s/m, voire supérieure ou égale à 10 kPa.s/m : il est de préférence étanche à l'air de façon à procurer une bonne isolation acoustique. Un voile étanche a une résistance spécifique à l'écoulement d'air qui est infinie, c'est-à-dire qui est dans les limites de ce qui peut être mesuré. Le voile avant peut être peint pour améliorer l'esthétique du panneau côté face visible. Le voile avant peut être collé sur la face avant du panneau après un léger ponçage permettant d'aplanir celle-ci.

Le panneau en laine minérale comprend en outre un taux massique de liant compris entre 2% et 15% de la masse totale, de préférence entre 2% et 10% de la masse totale.

Le panneau en laine minérale présente une absorption acoustique α_{W} supérieure ou égale à 0,9. L'absorption acoustique est mesurée selon la norme ISO 354. L'indicateur α_{W} est ensuite calculé selon la norme ISO 11654. Dans toute la demande, les mesures ont été réalisées avec un plénum de 200 mm en hauteur de construction.

Le panneau en laine minérale présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB. L'isolation acoustique est mesurée selon la norme ISO 10848-1. L'indicateur D_{nfw} est ensuite calculé selon la norme ISO 717-1. Dans toute la demande, les mesures ont été réalisées avec un plénum de 700 mm en hauteur de construction.

Les mesures d'absorption et d'isolation acoustiques sont réalisées sur le panneau avec les voiles avant/arrière.

L'invention concerne également le procédé de fabrication du panneau en laine minérale tel que décrit plus haut. Le procédé comprend une étape de fabrication d'un mat de fibres minérales, par centrifugation interne s'il s'agit de fibres de verre et par centrifugation externe s'il s'agit de fibres de roche, puis une étape de crêpage du mat de fibres de verre avec un taux de crêpage compris entre 1,5 et 5.

L'étape de fabrication du mat de fibres de verre par centrifugation interne est réalisée à l'aide d'une installation comportant :
∘ au moins un centrifugeur apte à tourner autour d'un axe X, notamment vertical, et dont la bande périphérique est percée d'une pluralité d'orifices pour délivrer des filaments d'un matériau fondu,
∘ un moyen d'étirage gazeux à haute température sous forme d'un brûleur annulaire qui assure l'étirage des filaments en fibres, et
∘ un tapis de réception associé à des moyens d'aspiration pour réceptionner les fibres.

Le ou les centrifugeurs, encore appelés assiettes de fibrage, permettent en effet de former des fibres minérales ou d'autres matériaux thermoplastiques, par un procédé de centrifugation interne associée à un étirage par un courant gazeux à haute température. La centrifugation interne s'applique notamment à la production industrielle de laine de verre destinée à entrer par exemple dans la composition de produits d'isolation thermique et/ou acoustique. Un filet de verre fondu est introduit dans chaque centrifugeur tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz, nommée tapis de réception.

Pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

Ces paramètres permettent en particulier d'ajuster la densité de surface et le micronaire du panneau en laine de verre.

De préférence, le diamètre des orifices de chaque centrifugeur est compris entre 0,5 et 1,1 mm. Chaque centrifugeur présente de préférence un diamètre compris entre 200 et 800 mm.

L'étape de fabrication du mat de fibres de roche par centrifugation externe est réalisée à l'aide d'une installation comportant
∘ au moins trois rotors aptes à tourner autour d'un axe Y, notamment horizontal, et dont le contact avec le matériau fondu permet de délivrer des fibres, et
∘ un tapis de réception associé à des moyens d'aspiration pour réceptionner les fibres.

Pendant l'étape de fabrication du mat de fibres de roche, une combinaison de paramètres est réglée parmi au moins :
∘ la tirée totale de roche par jour, qui est comprise entre 100 et 250 tonnes/jour,
∘ la vitesse de rotation des rotors, qui est comprise entre 2000 et 4000 tours/min.

Ces paramètres permettent en particulier d'ajuster la densité de surface et le fasonaire du panneau en laine de roche.

De préférence, chaque rotor présente un diamètre compris entre 150 mm et 350 mm.

En outre, dans les deux types de procédés, du liant est projeté sur les fibres minérales avant qu'elles ne tombent sur le tapis de réception, avec un taux compris entre 2% et 15% de la masse totale, de préférence entre 2% et 10% de la masse totale. Le mat de fibres minérales est ensuite passé en étuve, après le crêpage, afin de polymériser le liant.

Pour finaliser le produit, un voile est collé sur chacune des faces principales du panneau en laine de roche, les spécificités de chacun des voiles ayant été données plus haut.

Un premier exemple selon l'invention est un panneau en laine de verre de densité 117 kg/m³ et d'épaisseur de 50 mm, présentant une résistivité à l'écoulement d'air de 63 kPa.s/m² et un module d'Young de 2,3 MPa. Le micronaire est de 4,3/5g. Le taux de crêpage est de 3,5. Le panneau comporte un voile avant présentant une résistance spécifique à l'écoulement d'air de 0,3 kPa.s/m et un voile arrière étanche. Le panneau n'est pas découpé dans son épaisseur. L'absorption acoustique α_{W} est de 0,9 et l'isolation acoustique D_{nfw} est de 42 dB.

Un deuxième exemple selon l'invention est un panneau en laine de verre de densité de 102 kg/m³ et d'épaisseur 52 mm, présentant une résistivité à l'écoulement d'air de 68 kPa.s/m² et un module d'Young de 0,9 MPa. Le micronaire est de 3,6/5g. Le taux de crêpage est de 3,5. Le panneau comporte un voile avant présentant une résistance spécifique à l'écoulement d'air de 0,3 kPa.s/m et un voile arrière étanche. Le panneau n'est pas découpé dans son épaisseur. L'absorption acoustique α_{W} est de 0,95 et l'isolation acoustique D_{nfw} est de 41 dB.

Un troisième exemple selon l'invention est un panneau en laine de roche de densité 130 kg/m³ et d'épaisseur 38 mm, présentant une résistivité à l'écoulement d'air de 110 kPa.s/m² et un module d'Young de 0,9 MPa. Le fasonaire est de 270. Le taux de crêpage est de 3. Le panneau comporte un voile avant présentant une résistance spécifique à l'écoulement d'air de 0,3 kPa.s/m et un voile arrière étanche. Le panneau n'est pas découpé dans son épaisseur. L'absorption acoustique aw est de 0,9 et l'isolation acoustique D_{nfw} est de 40 dB.

Ainsi, des panneaux en laine minérale avec à la fois une bonne absorption acoustique et une bonne isolation acoustique ont pu être fabriqués, sans découpe dans l'épaisseur.

## Revendications

1. Panneau en laine minérale destiné à être utilisé comme panneau acoustique et présentant :
- une densité de surface supérieure ou égale à 3,2 kg/m², de préférence supérieure ou égale à 4 kg/m², ou encore supérieure ou égale à 4,5 kg/m², voire supérieure ou égale à 5 kg/m²,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4 MPa, de préférence compris entre 0,8 et 4 MPa, de façon encore plus préférée entre 1,2 MPa et 4 MPa, voire entre 1,5 MPa et 4 MPa, ou encore entre 2 MPa et 4 MPa,
- et le panneau n'étant pas coupé dans l'épaisseur selon un plan sensiblement parallèlement à ses faces principales.

2. Panneau selon la revendication 1, présentant en outre un micronaire compris entre 2,5/5g et 6/5g, de préférence entre 3/5g et 6/5g, voire entre 3,5/5g et 6/5g, ou encore entre 4/5g et 5/5g ou un fasonaire compris entre 200 et 300, de préférence entre 200 et 290, voire entre 200 et 280, ou encore entre 200 et 270.

3. Panneau selon la revendication 1 ou 2, comprenant en outre, sur chacune de ses faces principales, un voile.

4. Panneau selon l'une des revendications 1 à 3, dans lequel le voile destiné à être tourné du côté d'où provient le son à amortir ayant une résistance spécifique à l'écoulement de l'air inférieure ou égale à 1 kPa.s/m, de préférence inférieure ou égale à 0,5 kPa.s/m, et le voile opposé ayant une résistivité spécifique à l'écoulement de l'air supérieure ou égale à 1 kPa.s/m, de préférence supérieure ou égal 5 kPa.s/m, voire supérieure ou égale à 10 kPa.s/m, ou encore étanche à l'air.

5. Panneau selon l'une des revendications 1 à 4, comprenant un taux massique de liant compris entre 2% et 15% de la masse totale, de préférence entre 2% et 10% de la masse totale.

6. Panneau selon l'une des revendications 1 à 5, présentant une absorption acoustique α_{W} supérieure ou égale à 0,9.

7. Panneau selon l'une des revendications 1 à 6, présentant une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

8. Procédé de fabrication du panneau en laine minérale selon l'une des revendications 1 à 7, comprenant les étapes suivantes :
- fabrication d'un mat de fibres minérales par :
∘ centrifugation interne pour des fibres de verre, à l'aide d'une installation comportant :
▪ au moins un centrifugeur apte à tourner autour d'un axe X, notamment vertical, et dont la bande périphérique est percée d'une pluralité d'orifices pour délivrer des filaments d'un matériau fondu,
▪ un moyen d'étirage gazeux à haute température sous forme d'un brûleur annulaire qui assure l'étirage des filaments en fibres, et
▪ un tapis de réception associé à des moyens d'aspiration pour réceptionner les fibres, ou
∘ centrifugation externe pour des fibres de roche, à l'aide d'une installation comportant :
▪ au moins trois rotors aptes à tourner autour d'un axe Y, notamment horizontal, et dont le contact avec le matériau fondu permet de délivrer des fibres, et
▪ un tapis de réception associé à des moyens d'aspiration pour réceptionner les fibres,
- crêpage du mat de fibres minérales avec un taux de crêpage compris entre 1,5 et 5, de préférence entre 2 et 5, voire entre 2,5 et 5, ou encore entre 3 et 5.

9. Procédé selon la revendication 8, dans lequel, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, qui est comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur, qui est compris entre 5000 et 40000, de préférence entre 15000 et 35000, et
∘ la vitesse de rotation du centrifugeur à une vitesse supérieure à 2000 tours/minute.

10. Procédé selon la revendication 8 ou 9, dans lequel que le diamètre des orifices de chaque centrifugeur est compris entre 0,5 et 1,1 mm.

11. Procédé selon l'une des revendications 8 à 10, dans lequel chaque centrifugeur présente un diamètre compris entre 200 et 800 mm.

12. Procédé selon la revendication 8, dans lequel, pendant l'étape de fabrication du mat de fibres de roche, une combinaison de paramètres est réglée parmi au moins :
∘ la tirée totale de roche par jour, qui est comprise entre 100 et 250 tonnes/jour,
∘ la vitesse de rotation des rotors, qui est comprise entre 2000 et 4000 tours/min.

13. Procédé selon la revendication 12, dans lequel chaque rotor présente un diamètre compris entre 150 mm et 350 mm.

14. Procédé selon l'une des revendications 8 à 13, dans lequel du liant est projeté sur les fibres minérales avant qu'elles ne tombent sur le tapis de réception, avec un taux compris entre 2% et 15% de la masse totale, de préférence entre 2% et 10% de la masse totale, le mat de fibres minérales étant passé en étuve, de préférence après crêpage, afin de polymériser le liant.

15. Procédé selon l'une des revendications 8 à 14, dans lequel un voile est collé sur chacune des faces principales du panneau en laine minérale.
